# EUROPÄISCHE PATENTSCHRIFT

(11) **EP 3 432 507 B1**
(45) Veröffentlichungstag und Bekanntmachung des Hinweises auf die Patenterteilung: **11.09.2019**
(21) Anmeldenummer: 17182389.1
(22) Anmeldetag: 20.07.2017
(51) Int. Cl.: H04L 9/00

(54) **ÜBERWACHUNG EINER BLOCKCHAIN**
MONITORING OF A BLOCK CHAIN
SURVEILLANCE D'UNE CHAÎNE À BLOCS

(43) Veröffentlichungstag der Anmeldung: 23.01.2019
(73) Patentinhaber: Siemens Aktiengesellschaft, 80333 München (DE)
(72) Erfinder: Falk, Rainer, 85586 Poing (DE)

(56) Entgegenhaltungen:
- US-A1- 2016 275 461
- TANG YUZHE ET AL: "Social-Aware Decentralization for Secure and Scalable Multi-party Computations", 2017 IEEE 37TH INTERNATIONAL CONFERENCE ON DISTRIBUTED COMPUTING SYSTEMS WORKSHOPS (ICDCSW), IEEE, 5. Juni 2017 (2017-06-05), Seiten 246-251, XP033122889, DOI: 10.1109/ICDCSW.2017.56 [gefunden am 2017-07-13]

## Beschreibung

Die vorliegende Erfindung betrifft eine Blockchain. Insbesondere betrifft die Erfindung die Überwachung einer Blockchain hinsichtlich ihrer Vertrauenswürdigkeit.

### Stand der Technik

Unter einer Blockchain wird allgemein eine verteilte Datenbank verstanden, deren Inhalte durch kryptographische Verkettung gegen nachträgliche Manipulation gesichert sind. Ein abzuspeichernder Datensatz wird mittels eines kryptographischen Hashwertes mit einem zeitlich vorangehenden Datensatz verknüpft. Die Datensätze werden dezentral auf mehreren Knoten gehalten und zwischen den Knoten repliziert.

Solange die Summe der Verarbeitungsleistungen der beteiligten Knoten größer ist als die Verarbeitungsleistung eines Angreifers, ist die Blockchain gegen eine feindliche Übernahme und folgender Manipulation geschützt. Durch die hohe erreichbare Sicherheit werden Blockchains beispielsweise für Kryptowährungen wie Bitcoin verwendet. Auch Verträge, die übliche Lebenssachverhalte betreffen können, werden zunehmend als Smart Contracts mittels Blockchains gesichert. Der mittels einer Blockchain abgesicherte wirtschaftliche oder datentechnische Wert kann dabei beträchtlich sein. Es ist daher wünschenswert, zu erkennen, ob eine Blockchain eine geforderte Sicherheit garantieren kann oder nicht.

Tang Yuzhe et al.: "Social-Aware Decentralization for Secure and Scalable Multi-party Computations", 2017 IEEE 37TH INTERNATIONAL CONFERENCE ON DISTRIBUTED COMPUTING SYSTEMS WORKSHOPS (ICDCSW), IEEE, 5. Juni 2017 (2017-06-05), Seiten 246-251, betrifft die Auswahl von Knoten eines verteilten Berechnungsnetzwerks auf der Basis sozialer Beziehungen zwischen den Knoten.

US 2016/275461 A1 schlägt vor, einen unbekannten Knoten einer Überprüfung zu unterziehen, bevor er für eine Transaktion als Teil eines Blockchain-Netzwerks akzeptiert wird.

Der Erfindung liegt die Aufgabe zu Grunde, eine Technik bereitzustellen um eine Blockchain zu überwachen. Die Erfindung löst diese Aufgabe mittels der Gegenstände der unabhängigen Ansprüche. Unteransprüche geben bevorzugte Ausführungsformen wieder.

### Offenbarung der Erfindung

Ein Verfahren zum Überwachen einer Blockchain durch eine Vorrichtung umfasst Schritte des Bewertens eines Charakteristikums einer physischen Infrastruktur, die der Blockchain zu Grunde liegt; wobei einer bestimmten Information, die auf das Charakteristikum hinweist, ein quantitativ vergleichbarer Wert zugeordnet wird; des Vergleichens des Wertes mit einer vorbestimmten Parameter; und des Ausgebens eines Signals über eine Schnittstelle, falls der Wert kleiner als der vorbestimmte Parameter ist. Dabei umfasst die Infrastruktur mehrere Knoten, die mittels eines Netzwerks miteinander gekoppelt sind, und das Charakteristikum umfasst einen physischen oder topologischen Parameter der Infrastruktur.

Der Erfindung liegt die Erkenntnis zu Grunde, dass eine Blockchain eine untrennbare Kombination eines Verfahrens mit einer physischen Infrastruktur bildet und die Sicherheit oder Verfügbarkeit einer Blockchain maßgeblich beeinträchtigt werden können, wenn ein vorbestimmtes Charakteristikum der Infrastruktur einer zu Grunde liegenden Annahme nicht mehr genügt. Ein Charakteristikum umfasst üblicherweise einen Strukturparameter, der üblicherweise die Infrastruktur, ihre Konfiguration oder Auslastung betrifft.

Die Infrastruktur umfasst üblicherweise Knoten, die physische Verarbeitungsplattformen (Rechner, Computer, Hardware) zur Durchführung eines Verfahrens bilden, sowie ein Netzwerk. Insbesondere gilt es zu erkennen, wenn eine ursprünglich dezentral geprägte oder geplante Infrastruktur zentralistisch wird. In diesem Fall könnte der Ausfall oder die feindliche Übernahme eines zentralen Knotens zu einer verminderten Verfügbarkeit oder zu einer Manipulation durch Dritte führen.

Es wird daher vorgeschlagen, die Infrastruktur zu überwachen, um eine Aussage über die Sicherheit der Blockchain machen zu können bzw. ein Signal oder einen Alarm auszugeben, falls die Sicherheit nach einem vorbestimmten Standard nicht mehr gewährleistet ist. Dieser Standard kann in Abhängigkeit einer Anwendung der Blockchain gewählt und in Form des Parameters oder eines Satzes mehrerer Parameter ausgedrückt werden.

Dadurch kann erkannt werden, wenn die Interaktion mit einer Blockchain über eine "Dummy-Instanz" führt, also einen Knoten, der nicht in ausreichendem Maß einer von vielen ähnlichen und gleichberechtigten Knoten ist. Eine solche Instanz kann entstehen, wenn die Infrastruktur nicht genügend gepflegt oder unterstützt wird oder wenn die Blockchain unpopulär geworden ist. Durch das Erkennen kann insbesondere verhindert werden, dass eine kritische Transaktion auf einer nicht ausreichend vertrauenswürdigen Blockchain erfolgt.

Da es im Allgemeinen keine zentrale Kontrolle über die Infrastruktur einer Blockchain gibt, sondern die Infrastruktur durch mitwirkende Beteiligende dezentral und selbstorganisierend erbracht wird, kann auch nicht verlässlich vorhergesagt werden, wie die Infrastruktur zu einem bestimmten Zeitpunkt tatsächlich aussieht. Durch die aktuelle Bestimmung wenigstens eines Charakteristikums kann eine Bewertung der Infrastruktur durchgeführt werden.

Die Bewertung eines Charakteristikums stellt letztlich eine Abbildung einer Systemeigenschaft der Infrastruktur auf einen quantifizierten Wert dar, um einen Vergleich mit dem oder den Parametern zu ermöglichen. Die Umsetzung eines Charakteristikums in einen Wert kann auf unterschiedliche Weisen erfolgen.

Umfasst das Charakteristikum beispielsweise einen numerischen Wert, so kann dieser übernommen, skaliert oder in einen von mehreren vorbestimmten Bereichen eingeordnet (klassifiziert) werden. Umfasst das Charakteristikum einen geometrischen oder im geographischen Sinne topologischen Parameter, so kann eine morphologische oder statistische Betrachtung angewendet werden, um einen quantifizierten Wert zu erhalten. In weiteren Ausführungsformen ist auch eine einfache oder mehrfache Integration oder Differentiation oder eine Transformation, z. B. eine diskrete Fouriertransformation oder eine Z-Transformation, einer zeitlichen Entwicklung eines Charakteristikums möglich.

Bevorzugt werden mehrere physische Charakteristika bewertet und mit zugeordneten Parametern verglichen. Dabei können die Charakteristika und die Parameter jeweils einen Vektor bilden, wobei die Vektoren miteinander verglichen werden. Ferner können mehrere Charakteristika jeweils skaliert und addiert werden, um eine gewichtete Summe zu bilden, die mit einem vorbestimmten Schwellenwert verglichen werden kann. Bevorzugt wird das Signal bereits ausgegeben, wenn eine der Bewertungen kleiner als der zugeordnete Parameter ist.

In diesem Dokument wird davon ausgegangen, dass ein numerisch groß bewertetes Charakteristikum als positiv bezüglich einer Sicherheit oder Verfügbarkeit der Infrastruktur zu werten ist. Eine umgekehrte Betrachtungsweise ist jedoch ebenfalls möglich; das Signal sollte dann ausgegeben werden, falls die Bewertung den Parameter unterschreitet.

Bei einer Blockchain entspricht ein Knoten üblicherweise einem Rechner, einem Rechnerverbund oder allgemein einer Verarbeitungseinheit, die eine Transaktion auf der Blockchain durchführen kann, insbesondere um einen Datenblock an die Blockchain anzuhängen. Der Knoten ist physisch durch Hardware repräsentiert, ohne die eine Verarbeitung nicht erfolgen kann.

Im Folgenden werden einige Charakteristika vorgestellt, deren Einflüsse auf die Sicherheit oder Verfügbarkeit der Blockchain bewertet werden können.

Beispielsweise kann das Charakteristikum eine Anzahl von aktiven Knoten der Infrastruktur umfassen. Ein Knoten kann als aktiv gelten, falls er Daten von zu bestätigenden Transaktionen erhält bzw. abfragt, oder dass Transaktionsdaten von ihm abfragbar sind. Sinkt beispielsweise eine für die Übermittlung von Transaktionsdaten verwendete Bandbreite oder eine Anzahl übermittelter Transaktionsdaten pro Zeit unter einen vorbestimmten Schwellenwert, so kann der Knoten als inaktiv gelten. So kann unmittelbar abgeschätzt werden, wie viele Knoten an der Aufrechterhaltung der Blockchain beteiligt sind. Je mehr Knoten die Blockchain unterstützen, desto größer können die Sicherheit oder die Verfügbarkeit der Blockchain sein.

Das Charakteristikum kann eine Anzahl von erfolgreichen Knoten der Infrastruktur umfassen. Um eine Transaktion auf der Datenbank der Blockchain durchzuführen, können mehrere Knoten jeweils eine aufwändige kryptographische oder mathematische Aufgabe lösen. Der Knoten, der die Aufgabe als erster löst, gilt als erfolgreich und kann eine Belohnung erhalten. Ein Knoten kann als erfolgreich gelten, wenn er einen vorbestimmten Anteil der an ihn (oder insgesamt) gestellten Rätsel als erster löst, oder wenn die Zahl der durch ihn gelösten Rätsel pro Zeit einen vorbestimmten Schwellenwert übersteigt. Nicht erfolgreiche Knoten können zur Sicherheit der Blockchain nur wenig oder gar nicht beitragen, da ihre Verarbeitungsleistung durch die anderer Knoten verschattet wird. Je mehr erfolgreiche Knoten die Blockchain unterstützen, desto größer können die Sicherheit oder die Verfügbarkeit der Blockchain sein.

Das Charakteristikum kann eine Dezentralisierung von erfolgreichen Knoten der Infrastruktur umfassen. Je größer die Dezentralisierung ist, desto geringer ist ein Unterschied zwischen den Erfolgszahlen pro Zeit der einzelnen Knoten bei der Lösung der mathematischen Aufgaben. Umgekehrt wird die Dezentralisierung kleiner, wenn der Unterschied zwischen den Erfolgszahlen pro Zeit der Knoten größer wird. Die Erfolgszahl eines Knotens ist die Anzahl der gestellten Aufgaben, die der Knoten als Erster gelöst hat. Die Erfolgszahlen der Knoten pro Zeit können in einem Histogramm dargestellt werden. Je geringer die Unterschiede der in den einzelnen Klassen (engl.: bins) eingetragenen Häufigkeiten sind, desto größer ist die Dezentralisierung. Andere statistische Betrachtungen der Verteilung sind ebenfalls möglich. Hat beispielsweise ein erster Knoten 1000 Erfolge pro Minute, mehrere andere Knoten aber nur 50-100 Erfolge pro Minute, so kann die Dezentralisierung geringer sein als wenn alle Knoten 80-100 Erfolge pro Minute haben.

Das Charakteristikum kann eine geographische Dezentralisierung von Knoten umfassen. Dabei kann die oben beschriebene Dezentralisierung auf eine geographische Verteilung der Knoten bezogen werden. In Varianten können bei dieser Betrachtung jeweils nur aktive und/oder nur erfolgreiche Knoten betrachtet werden. Anders ausgedrückt kann bestimmt werden, wie gleichmäßig die an der Blockchain teilnehmenden Knoten über eine geographische Region verteilt sind. Je gleichmäßiger die Verteilung ist, desto höher ist die Dezentralisierung. Der geographische Ort eines Knotens kann beispielsweise abgeschätzt werden, indem Adressdaten eines zur Kommunikation verwendeten Netzwerks analysiert werden. Ein ungefährer geographischer Ort eines Knotens kann beispielsweise auf Basis seiner IP-Adresse (IP: Internet Protocol) mit einiger Sicherheit bestimmt werden.

Das Charakteristikum kann eine insgesamt zur Verfügung stehende Verarbeitungsleistung aller Knoten umfassen. Je höher diese Gesamt-Verarbeitungsleistung ist, die auch Hash-Power genannt wird, desto größer müsste die Verarbeitungsleistung für einen erfolgreichen Angriff eines Dritten sein. Die Verarbeitungsleistung eines Knoten ist an seine Kosten gebunden, sodass eine große Hash-Power der Knoten der Blockchain einen erfolgreichen Angriff kostspielig und damit unwahrscheinlich macht.

Das Charakteristikum kann eine Dezentralisierung der insgesamt zur Verfügung stehenden Verarbeitungsleistung bezüglich der Knoten der Infrastruktur betreffen. Je gleichmäßiger die Hash-Power auf die einzelnen Knoten verteilt ist, desto größer können die infrastrukturbedingte Sicherheit oder Verfügbarkeit sein. In einer Weiterbildung kann das Charakteristikum eine geographische Verteilung der der Hash-Power betreffen.

Das Charakteristikum kann auch indirekt auf der Basis von Transaktionen in der Blockchain bestimmt werden. Beispielsweise können eine Anzahl von Transaktionen je Block; eine Anzahl von Nutzern, die Transaktionen einstellen; oder eine Anzahl aktiver Smart Contracts betrachtet werden. Ein Smart Contract kann als aktiv gelten, wenn gültige Transaktionen bestätigt werden, die einem Smart Contract zugeordnet werden können, d. h. die durch den Smart Contract erfolgreich validierbar sind. Der Smart Contract kann auch als aktiv gelten, wenn eine Anzahl Transaktionen pro Zeit einen vorbestimmten Schwellenwert übersteigt.

In einer weiteren Ausführungsform wird ein zeitlicher Verlauf der Bewertung erzeugt, wobei auf der Basis des Verlaufs eine abgeleitete Größe bestimmt wird. Insbesondere kann eine Änderungsgeschwindigkeit, deren Änderung oder die Größe einer Standardabweichung bestimmt werden. Je größer einer dieser Werte ist, desto weniger positiv können die Sicherheit oder Verfügbarkeit der Infrastruktur bewertet werden. In weiteren Ausführungsformen können auch ein Sprung oder eine Schwankung eines Charakteristikums betrachtet werden.

In einer Weiterbildung kann auf der Basis des zeitlichen Verlaufs einer Bewertung dessen Unterschreiten unter den Parameter vorhergesagt werden. Beispielsweise kann eine Trendanalyse durchgeführt werden, etwa auf der Basis einer linearen Regression. Das Signal kann bereits dann ausgegeben werden, wenn ein Unterschreiten des Parameters in einer kürzeren als einer vorbestimmten Zeit droht.

Eine Vorrichtung zur Überwachung einer Blockchain umfasst eine Schnittstelle zur Verbindung mit wenigstens einem Knoten der Blockchain; eine Schnittstelle zur Ausgabe eines Signals; und eine Verarbeitungseinrichtung zur Durchführung des hierin beschriebenen Verfahrens. Die Verbindung mit dem Knoten kann insbesondere über ein Netzwerk erfolgen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- Fig. 1: ein System mit einer Blockchain in einer Ausführungsform;
- Fig. 2: ein Ablaufdiagramm eines beispielhaften Verfahrens zum Überwachen einer Blockchain; und
- Fig. 3: Darstellungen von Charakteristika zweier fiktiver Blockchain-Infrastrukturen
darstellt.

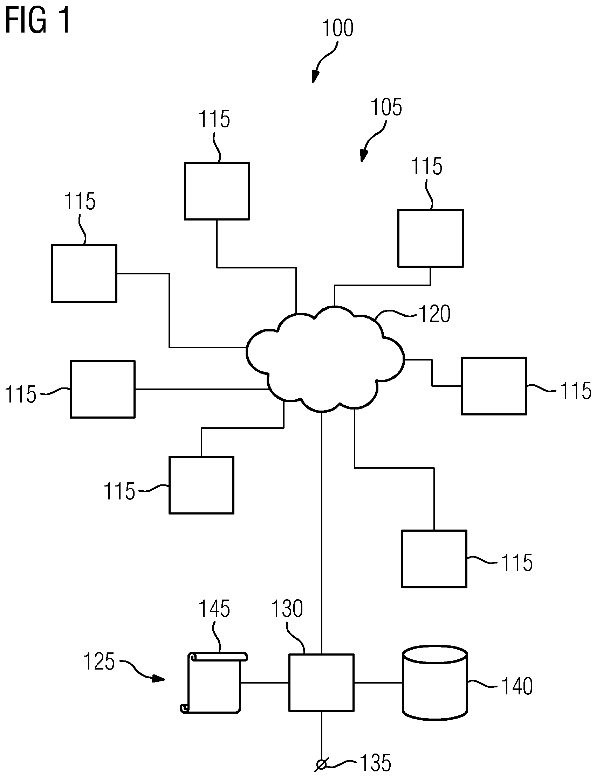

Figur 1 zeigt ein System 100, das eine Blockchain 105 realisiert, beispielsweise Bitcoin oder Ethereum. Die Blockchain 105 umfasst eine verteilte Infrastruktur 110, die gemeinsam bzw. in mehreren Instanzen ein Blockchain-Verfahren (nicht dargestellt) durchführt. Die Infrastruktur 110 umfasst mehrere Knoten 115 (engl.: miner), die mittels eines Netzwerks 120 miteinander gekoppelt sind. Jeder Knoten ist durch wenigstens eine physische Verarbeitungseinrichtung realisiert. Das Netzwerk 120 kann zur Infrastruktur 110 gezählt oder als zu Grunde liegender Dienst betrachtet werden.

Eine Vorrichtung 125 umfasst eine Verarbeitungseinrichtung 130, eine erste Schnittstelle 132 sowie optional eine zweite Schnittstelle 135 und/oder eine Speichervorrichtung 140. Die erste Schnittstelle 132 ist bevorzugt mit dem Netzwerk 120 verbunden, um möglichst mit einem der Knoten 115 kommunizieren zu können. Bevorzugt sind mehrere Knoten 115 erreichbar, aus denen einer zur Kommunikation ausgesucht werden kann. Zur Kommunikation kann ein Kommunikationsprotokoll der Blockchain, ein Transportprotokoll des Netzwerks 120 (beispielsweise TCP/IP) oder ein anderes Protokoll verwendet werden.

In einer Ausführungsform läuft auf einem oder mehreren der Knoten 115 jeweils ein Prozess, der Parameter des Knotens 115 über das Netzwerk 120 bereitstellt. Zu den Parametern können insbesondere eine vorhandene oder eingesetzte Netzwerk-Bandbreite, eine vorhandene oder eingesetzte Verarbeitungsleistung oder ein anderer auf die Blockchain 105 bezogener Transaktions- oder Verarbeitungsparameter des Knoten 115 zählen.

Die Vorrichtung 125 kann dazu eingerichtet sein, eine Transaktion in der Blockchain 105 zu veranlassen, zu überprüfen oder sich von einer Transaktion benachrichtigen zu lassen. Damit verbunden sein kann ein Dienst, ein Verfahren oder ein Angebot, das mittels der Blockchain 105 abgesichert werden soll. Die Sicherheit des Diensts kann davon abhängen, dass die Blockchain 105 einen vorbestimmten Grad der Verfügbarkeit oder der Sicherheit aufweist.

Es wird vorgeschlagen, mittels der Vorrichtung 125 die Voraussetzungen der Infrastruktur 110 zur Garantie von Verfügbarkeit oder Sicherheit der Blockchain 105 zu überprüfen.

Die Vorrichtung 125 ist bevorzugt dazu eingerichtet, mittels Kommunikation mit einem oder mehreren Knoten 115 oder durch Beobachtung von Kommunikation eines oder mehrerer Knoten 115 ein Charakteristikum zu bestimmen, das die Infrastruktur 110 der Blockchain 105 auszeichnet. Ferner ist die Vorrichtung 125 bevorzugt dazu eingerichtet, das Charakteristikum zu bewerten, indem es ihm einen bevorzugt numerischen Wert zuordnet, und diesen Wert mit einem vorbestimmten Parameter 145 vergleicht. Fällt der Vergleich negativ aus, liegt also der bestimmte Wert nicht auf einer gewünschten, vorbestimmten Seite des Parameters, so kann über die Schnittstelle 135 ein Signal ausgegeben werden. Die Bestimmung und Bewertung des Charakteristikums sowie der Vergleich mit dem Parameter 145 sind dabei so gewählt, dass das Signal darauf hinweist, dass eine vorbestimmte Eigenschaft der Infrastruktur 110 nicht mehr gilt oder im Begriff ist, nicht mehr zu gelten, sodass eine Sicherheit und/oder Verfügbarkeit der Blockchain 105 in Gefahr sein könnten.

Die Vorrichtung 125 arbeitet bevorzugt nur auf der Infrastruktur 110 der Blockchain 105. Eine Sicherheitsanalyse des auf den Knoten 115 ablaufenden Blockchain-Verfahrens sollte unabhängig davon ebenfalls durchgeführt werden, ist aber nicht Gegenstand der vorliegenden Erfindung. Die hierin beschriebene Funktionalität der Vorrichtung 125 kann alternativ auch als eigenständiger Dienst auf einer Cloud-Plattform realisiert sein. Ferner kann der Dienst auch auf einem der Knoten 115 laufen.

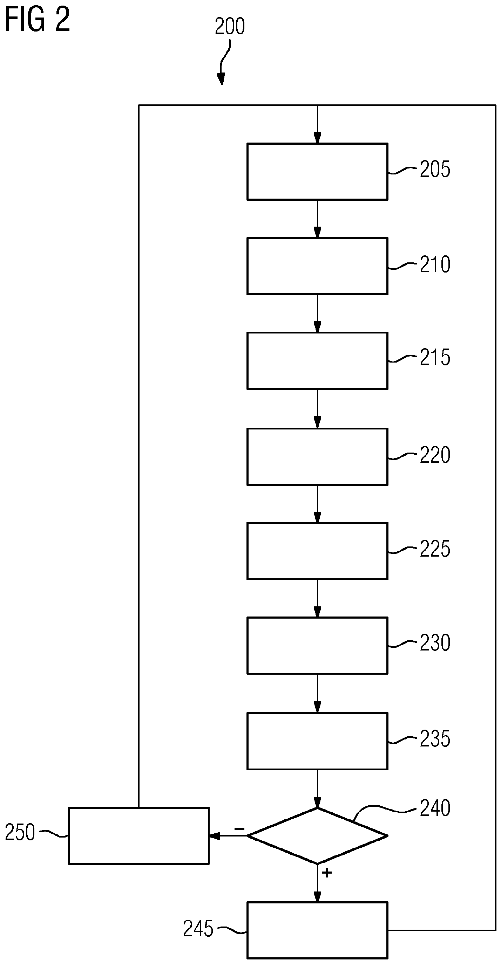

Figur 2 zeigt ein Ablaufdiagramm eines beispielhaften Verfahrens 200 zum Überwachen einer Blockchain 105. Das Verfahren 200 ist insbesondere zum Ablaufen auf der Vorrichtung 125 von Figur 1 und weiter bevorzugt auf deren Verarbeitungseinrichtung 130 eingerichtet, die beispielsweise einen programmierbaren Mikrocomputer oder Mikroprozessor umfassen kann. Das Verfahren 200 kann in Form eines Computerprogrammprodukts mit Programmcodemitteln vorliegen. Merkmale oder Vorteile des Verfahrens 200 können auf die Vorrichtung 125 bezogen werden oder umgekehrt.

In einem Schritt 205 können einer oder mehrere Parameter 145 erfasst werden, die bevorzugt in Abhängigkeit eines Dienstes gewählt sein können, der mittels der Blockchain 105 abgesichert werden soll.

In einem Schritt 220 können einer oder mehrere Knoten 115, die von der Infrastruktur 110 umfasst sind, bestimmt werden. In einem Schritt 215 können einer oder mehrere der bestimmten Knoten 115 abgetastet werden. Das Abtasten kann aktiv erfolgen, indem mit dem Knoten 115 kommuniziert wird, oder passiv, indem Informationen über den Knoten 115 bestimmt werden. Ferner können in einem Schritt 220 eine oder mehrere Transaktionen bestimmt oder beobachtet werden, die auf der Blockchain 105 durchgeführt werden. In einem Schritt 225 können Kommunikationsinformationen eines oder mehrerer Knoten 115 bestimmt werden. Diese können beispielsweise eine für die Belange der Blockchain 105 verwendete Bandbreite, eine Anzahl oder Häufigkeit bestimmter Nachrichten oder Adressinformationen des Knotens 115 oder einer Kommunikation mit dem Knoten 115 betreffen. Die bestimmten Informationen können in einem Schritt 230 in der Speichervorrichtung 140 abgelegt und/oder mit zuvor dort abgelegten Informationen in Kontext gesetzt werden. Es ist zu beachten, dass einige der angegebenen Schritte 210-230 auch in einer anderen Reihenfolge, mehrfach und/oder verschieden oft ausgeführt werden können.

Die bestimmten Informationen werden in einem Schritt 235 bewertet, indem einer Information, die auf ein vorbestimmtes Charakteristikum der Infrastruktur 110 hinweist, ein quantitativ vergleichbarer, bevorzugt numerischer Wert zugeordnet wird. In einem Schritt 240 werden eine oder mehrere Bewertungen mit einem oder mehreren Parametern 145 verglichen. Exemplarisch wird davon ausgegangen, dass eine hohe Bewertung eines Charakteristikums auf einen positiven Einfluss der Infrastruktur 110 auf die Sicherheit oder Verfügbarkeit der Blockchain 105 hinweist und eine geringere Bewertung auf einen weniger positiven Einfluss. Ein Maß an Sicherheit und/oder Verfügbarkeit der Blockchain 105 können daher aufgrund des oder der bestimmten Bewertungen bestimmt werden.

Wurde im Schritt 240 bestimmt, dass der Wert unterhalb des Parameters 145 liegt, kann in einem Schritt 245 ein Signal ausgegeben werden, insbesondere über die Schnittstelle 135. Wurden mehrere bewertete Charakteristika mit mehreren Parametern 145 verglichen, so kann die Art des Vergleichs vorgeben, ob bei Unterschreiten nur eines Wertes unter den zugeordneten Parameter das Signal bereits ausgegeben wird oder nicht. In einer Ausführungsform werden mehrere Charakteristika betrachtet und ihre Abweichungen gewichtet aufsummiert. Erst wenn die Summe einen vorbestimmten, weiteren Schwellenwert übersteigt, kann das Signal ausgegeben werden.

Das Signal kann an eine Person gerichtet sein und beispielsweise optisch, akustisch oder haptisch dargeboten werden. Das Signal kann aber auch eine Information umfassen, die an die Person, ein Verfahren oder einen Prozess geleitet wird. Dazu kann das Signal beispielsweise als elektrisches Schaltsignal, als Schaltkontakt, als Warnleuchte, als Hinweis auf einer Anzeige oder auch in Form einer Nachricht, z. B. als SNMP-Trap, MQTT-Nachricht oder über OPC UA, bereitgestellt werden.

Weiterhin kann die Prüfinformation oder die ermittelten Charakteristika in einer Log-Datenbank oder einer Blockchain 105 hinterlegt bzw. abgesichert werden. Vorzugsweise werden die Einträge durch eine kryptographische Prüfsumme (digitale Signatur, Message Authentication Code) der Vorrichtung 125 geschützt. Dies ermöglicht auch nachträglich eine Überprüfung ob zu einem gewissen zurückliegenden Zeitpunkt bzw. Zeitraum eine erforderliche Strukturvorgabe in Form eines geltenden Parametersatzes erfüllt war. Abhängig von diesem Umstand können in diesem Zeitraum in der Blockchain 105 bestätigte Transaktionen als gültig oder ungültig bzw. unbestätigt behandelt werden.

In Weiterbildungen können mehrere Parameter 145 bzw. Parametersätze für unterschiedliche Dienste oder durch unterschiedliche Anwender der Blockchain-Infrastruktur 110 hinterlegt sein. Dementsprechend können unterschiedliche Signale bereitgestellt werden, die jeweils einem der Parametersätze zugeordnet sind. Dadurch können auch Signale unterschiedlicher Dringlichkeit bereitgestellt werden, wenn sich beispielsweise die Sicherheit oder Verfügbarkeit der Infrastruktur 110 sukzessive verschlechtert.

Insbesondere kann das Signal von dem Dienst, der mittels der Blockchain 105 abgesichert werden soll, oder einer den Dienst beaufsichtigenden Komponente ausgewertet werden. Liegt das Signal vor, so kann beispielsweise eine vorbestimmte Transaktion in der Blockchain 105 ausgelöst oder Transaktionen in der Blockchain 105 bewusst ausgesetzt werden.

Wurde im Schritt 240 hingegen bestimmt, dass kein Signal auszugeben ist, so kann ein bereits ausgegebenes Signal in einem Schritt 250 gelöscht oder widerrufen werden. Anschließend kann das Verfahren 200 zum Anfang zurückkehren und erneut durchlaufen.

Das Verfahren 200 kann permanent oder mit einer vorbestimmten Häufigkeit ausgeführt werden, beispielsweise stündlich oder täglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

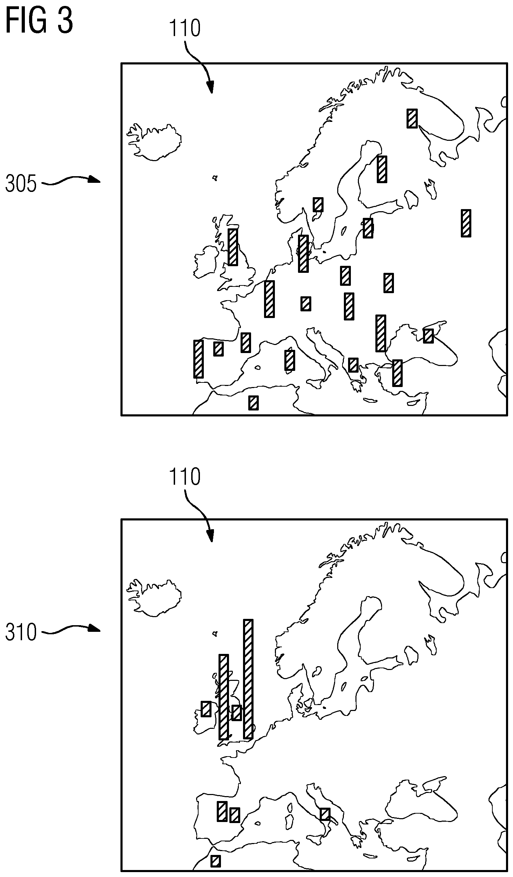

Figur 3 zeigt Darstellungen von ausgewählten Charakteristika zweier fiktiver Infrastrukturen 110 einer Blockchain 105. Eine erste Darstellung 305 betrifft eine Infrastruktur 110, auf deren Basis eine sichere, verfügbare und vertrauenswürdige Blockchain 105 realisiert werden kann. Eine zweite Darstellung 310 betrifft eine Infrastruktur 110, die ein Realisieren einer sicheren, verfügbaren und vertrauenswürdigen Blockchain 105 erschwert oder verhindert.

Beiden Darstellungen 305, 310 ist exemplarisch eine geographische Landkarte zu Grunde gelegt, die beispielhaft Europa umfasst. Eingezeichnete vertikale Balken entsprechen beispielhaften Charakteristika einzelner Knoten 115 der jeweiligen Infrastruktur 110. Die Positionen der Balken können einen Standort des zugeordneten Knoten 115 angeben.

Die Länge der dargestellten Balken kann eine von folgenden Kenngrößen eines Knotens 115 widerspiegeln:
- eine verfügbare oder eingesetzte Verarbeitungsleistung;
- eine verfügbare oder eingesetzte Netzwerk-Bandbreite;
- eine Anzahl von durchgeführten Transaktionen pro Zeit;
- eine Anzahl Erfolge pro Zeit;
- eine Anzahl Nutzer, die Transaktionen auf diesem Knoten 115 einstellen, pro Zeit; oder
- eine Anzahl aktiver Smart Contracts.

Die in der ersten Darstellung 305 dargestellte Infrastruktur 110 kann, bezogen auf vorbestimmte Parameter oder im Vergleich zur Infrastruktur 110 der zweiten Darstellung 310, als positiv bewertet werden, weil:
- die Knoten 115 örtlich relativ gleichmäßig verteilt sind;
- die örtliche Verteilung ein größeres Gebiet überspannt;
- die Knoten 115 in einer größeren Zahl unterschiedlicher Länder aufgestellt sind;
- die durch die Balken dargestellten Kenngröße über die Knoten 115 nicht zu stark variiert; oder
- die Summe der Kenngröße über alle Knoten 115 groß ist.

Aus entsprechenden Gründen kann die in der zweiten Darstellung 310 gezeigte Infrastruktur 110 als weniger positiv oder gar negativ bezüglich ihres Einflusses auf die Sicherheit oder Verfügbarkeit der Blockchain 105 bewertet werden.

## Patentansprüche

1. Verfahren (200) zum Überwachen einer Blockchain (105) durch eine Vorrichtung (125), wobei das Verfahren (200) folgende Schritte umfasst:
- Bewerten (235) eines Charakteristikums einer physischen Infrastruktur (110), die der Blockchain (105) zu Grunde liegt; wobei einer bestimmten Information, die auf das Charakteristikum hinweist, ein quantitativ vergleichbarer Wert zugeordnet wird;
- wobei die Infrastruktur (110) mehrere Knoten (115) umfasst, die mittels eines Netzwerks (120) miteinander gekoppelt sind;
- Vergleichen (240) des Wertes mit einer vorbestimmten Parameter; und
- Ausgeben (245) eines Signals über eine Schnittstelle (135), falls der Wert kleiner als der vorbestimmte Parameter ist, **dadurch gekennzeichnet, dass**
- das Charakteristikum einen physischen oder topologischen Parameter der Infrastruktur (110) betrifft.

2. Verfahren (200) nach Anspruch 1, wobei mehrere physische Charakteristika bewertet (235) und mit zugeordneten Parametern verglichen werden und das Signal ausgegeben wird, wenn eine der Bewertungen kleiner als der zugeordnete Parameter ist.

3. Verfahren (200) nach Anspruch 1 oder 2, wobei das Charakteristikum eine Anzahl von aktiven Knoten (115) der Infrastruktur (110) umfasst.

4. Verfahren (200) nach einem der vorangehenden Ansprüche, wobei das Charakteristikum eine Anzahl von erfolgreichen Knoten (115) der Infrastruktur (110) umfasst.

5. Verfahren (200) nach einem der vorangehenden Ansprüche, wobei das Charakteristikum eine Dezentralisierung von erfolgreichen Knoten (115) der Infrastruktur (110) umfasst.

6. Verfahren (200) nach einem der vorangehenden Ansprüche, wobei das Charakteristikum eine geographische Dezentralisierung von Knoten (115) umfasst.

7. Verfahren (200) nach einem der vorangehenden Ansprüche, wobei das Charakteristikum eine insgesamt zur Verfügung stehende Verarbeitungsleistung aller Knoten (115) umfasst.

8. Verfahren (200) nach einem der vorangehenden Ansprüche, wobei das Charakteristikum eine Dezentralisierung der insgesamt zur Verfügung stehenden Verarbeitungsleistung bezüglich der Knoten (115) der Infrastruktur (110) betrifft.

9. Verfahren (200) nach einem der vorangehenden Ansprüche, wobei das Charakteristikum auf der Basis von Transaktionen in der Blockchain (105) bestimmt wird.

10. Verfahren (200) nach einem der vorangehenden Ansprüche, wobei ein zeitlicher Verlauf der Bewertung erzeugt (230) und auf der Basis des Verlaufs eine abgeleitete Größe bestimmt wird.

11. Verfahren (200) nach Anspruch 10, wobei auf der Basis des Verlaufs das Unterschreiten der Bewertung unter den Parameter vorhergesagt (240) wird.

12. Vorrichtung (125) zur Überwachung einer Blockchain (105), wobei die Vorrichtung folgendes umfasst:
- eine Schnittstelle zur Verbindung mit wenigstens einem Knoten (115) der Blockchain (105);
- eine Schnittstelle (135) zur Ausgabe eines Signals;
und
- eine Verarbeitungseinrichtung (130) zur Durchführung eines Verfahrens (200) nach einem der vorangehenden Ansprüche.

## Claims

1. Method (200) for monitoring a block chain (105) by means of an apparatus (125),
wherein the method (200) comprises the following steps:
- assessing (235) a characteristic of a physical infrastructure (110) on which the block chain (105) is based; wherein a quantitatively comparable value is assigned to a particular item of information indicating the characteristic;
- wherein the infrastructure (110) comprises a plurality of nodes (115) which are coupled to one another by means of a network (120);
- comparing (240) the value with a predetermined parameter; and
- outputting (245) a signal via an interface (135) if the value is less than the predetermined parameter,
**characterized in that**
- the characteristic relates to a physical or topological parameter of the infrastructure (110).

2. Method (200) according to Claim 1, wherein a plurality of physical characteristics are assessed (235) and are compared with associated parameters, and the signal is output if one of the assessments is less than the associated parameter.

3. Method (200) according to Claim 1 or 2, wherein the characteristic comprises a number of active nodes (115) of the infrastructure (110).

4. Method (200) according to one of the preceding claims, wherein the characteristic comprises a number of successful nodes (115) of the infrastructure (110).

5. Method (200) according to one of the preceding claims, wherein the characteristic comprises a decentralization of successful nodes (115) of the infrastructure (110).

6. Method (200) according to one of the preceding claims, wherein the characteristic comprises a geographical decentralization of nodes (115).

7. Method (200) according to one of the preceding claims, wherein the characteristic comprises a total available processing power of all nodes (115).

8. Method (200) according to one of the preceding claims, wherein the characteristic relates to a decentralization of the total available processing power with respect to the nodes (115) of the infrastructure (110).

9. Method (200) according to one of the preceding claims, wherein the characteristic is determined on the basis of transactions in the block chain (105).

10. Method (200) according to one of the preceding claims, wherein a temporal profile of the assessment is generated (230) and a derived variable is determined on the basis of the profile.

11. Method (200) according to Claim 10, wherein it is predicted (240) on the basis of the profile that the assessment will fall below the parameter.

12. Apparatus (125) for monitoring a block chain (105), wherein the apparatus comprises the following:
- an interface for connection to at least one node (115) in the block chain (105);
- an interface (135) for outputting a signal; and
- a processing device (130) for carrying out a method (200) according to one of the preceding claims.

## Revendications

1. Procédé (200) destiné à la surveillance d'une chaîne à blocs (105) par le biais d'un dispositif (125), dans lequel le procédé (200) comprend les étapes suivantes :
- évaluation (235) d'une caractéristique d'une infrastructure physique (110) qui est à la base de la chaîne à blocs (105) ; dans lequel une valeur comparable quantitativement est associée à une information déterminée qui signale la caractéristique ;
- dans lequel l'infrastructure (110) comprend plusieurs noeuds (115) qui sont couplés les uns avec les autres au moyen d'un réseau (120) ;
- comparaison (240) de la valeur avec un paramètre prédéterminé ; et
- émission (245) d'un signal via l'interface (135) dans le cas où la valeur est plus petite que le paramètre prédéterminé,
**caractérisé en ce que**
- la caractéristique concerne un paramètre physique ou topologique de l'infrastructure (110).

2. Procédé (200) selon la revendication 1, dans lequel plusieurs caractéristiques physiques sont évaluées (235) et comparées à des paramètres associés et le signal est émis lorsque l'une des évaluations est plus basse que le paramètre associé.

3. Procédé (200) selon la revendication 1 ou 2, dans lequel la caractéristique comprend un nombre de noeuds actifs (115) de l'infrastructure (110).

4. Procédé (200) selon l'une des revendications précédentes, dans lequel la caractéristique comprend un nombre de noeuds performants (115) de l'infrastructure (110).

5. Procédé (200) selon l'une des revendications précédentes, dans lequel la caractéristique comprend une décentralisation de noeuds performants (115) de l'infrastructure (110).

6. Procédé (200) selon l'une des revendications précédentes, dans lequel la caractéristique comprend une décentralisation géographique de noeuds (115).

7. Procédé (200) selon l'une des revendications précédentes, dans lequel la caractéristique comprend une puissance de traitement de tous les noeuds (115) disponible dans l'ensemble.

8. Procédé (200) selon l'une des revendications précédentes, dans lequel la caractéristique concerne une décentralisation de la puissance de traitement disponible dans l'ensemble en ce qui concerne les noeuds (115) de l'infrastructure (110).

9. Procédé (200) selon l'une des revendications précédentes, dans lequel la caractéristique est déterminée sur la base de transactions dans la chaîne à blocs (105).

10. Procédé (200) selon l'une des revendications précédentes, dans lequel un déroulement chronologique de l'évaluation est généré (230) et une grandeur déduite sur la base du déroulement est déterminée.

11. Procédé (200) selon la revendication 10, dans lequel sur la base du déroulement le passage de l'évaluation en dessous du paramètre est prédit (240).

12. Dispositif (125) destiné à la surveillance d'une chaîne à blocs (105), dans lequel le dispositif comprend :
- une interface destinée à la connexion avec au moins un noeud (115) de la chaîne à blocs (105) ;
- une interface (135) destinée à l'émission d'un signal ;
et
- un dispositif de traitement (130) destiné à l'exécution d'un procédé (200) selon l'une des revendications précédentes.
